# EUROPÄISCHE PATENTSCHRIFT

(11) **EP 1 259 046 B1**
(45) Veröffentlichungstag und Bekanntmachung des Hinweises auf die Patenterteilung: **26.10.2005**
(21) Anmeldenummer: 02450095.1
(22) Anmeldetag: 22.04.2002
(51) Int. Cl.: H04L 29/06, G06F 1/00, G07F 19/00

(54) **Anlage für die sichere Durchführung von Transaktionen mittels mehrerer Authentifizierungscodes**
Device for realising secure transactions by means of multiple authentication codes
Dispositif permettant des transactions sécurisées au moyen de plusieurs codes d'authentification

(30) Priorität: 23.04.2001 AT 6512001
(43) Veröffentlichungstag der Anmeldung: 20.11.2002
(73) Patentinhaber: Fischlmayr, Albert, 4407 Dietach (AT)
(72) Erfinder: Fischlmayr, Albert, 4407 Dietach (AT)
(74) Vertreter: Hübscher, Helmut

(56) Entgegenhaltungen:
- EP-A- 1 052 825
- WO-A-00/78009
- WO-A-96/00485

## Beschreibung

Die Erfindung bezieht sich auf eine Anlage für die sichere Durchführung von Transaktionen zwischen informationsverarbeitenden Systemen mit einem Terminal, das zur Eingabe einer Benutzerkennung dient, mit einer Auswerteeinheit, die mit dem Terminal über ein primäres Netz verbunden ist, und im wesentlichen aus einer Speicher- und Prozessoreinheit besteht, welche zur Speicherung von Benutzerstammdaten und laufenden Transaktionsdaten dient, mit einem Codegenerator, der einen Sicherheitscode erzeugt, mit einer Sendeeinrichtung, die den Sicherheitscode über ein sekundäres Netz an ein Empfangsgerät sendet, und mit einer Eingabemöglichkeit für den Sicherheitscode am Terminal und einer Überprüfung des eingegebenen Sicherheitscodes auf Gültigkeit durch die Auswerteeinheit.

Für die sichere Durchführung von Transaktionen zwischen informationsverarbeitenden Anlagen aller Art werden User-IDs, PINs (Personal Identification Number), Passwörter, Kreditkartennummern, PrePaid-Karten und TAN's (Transaktionsnummer), in schriftlicher und/oder elektronischer Form, für die Authentifizierung und Autorisierung des Benutzers verwendet. Vor allem bei Durchführung von Distanzgeschäften gewähren die existierenden Anlagen für den Händler oder Dienstleister relativ hohe Sicherheit. Für den Benutzer (Kunden) bedeuten die existierenden Anlage einen Vertrauensvorschuß und ein hohes Sicherheitsrisiko. Gestohlene oder gefälschte Kreditkarten respektive der Diebstahl von Kreditkartennummern, meist elektronisch im Internet (durch Hacker und/oder Missbrauch der Daten durch Dritte), und eine nachlässige Handhabung von User-IDs und PINs durch den Benutzer selbst stellen bei bisherigen Lösungen permanente Sicherheitsrisken dar. Als relativ sicher erweist sich das System der TAN-Listen für Homebanking oder Internetbanking. Jedoch ist die Verwendung von TANs insofern problematisch, da die TANs in schriftlicher Form von den Benutzern meist unsicher aufbewahrt werden und für sie kein Ablaufdatum existiert. Somit existiert auch bei diesem System ein latentes Sicherheitsproblem. Außerdem ist die Verwendung von TANs immer nur in Verbindung mit einem korrespondierenden Partner (meist eine Bank) verwendbar. Die Zusendung der TAN-Listen an die Benutzer bzw. die Vorabanlage der TANs in den EDV-Systemen macht den Betrieb eines solchen Systems verwaltungstechnisch sehr aufwendig und damit kostenintensiv. Die Verwendung von Systemen, hauptsächlich bei Internettransaktionen, die einen sekundären Leitungsweg zur Übermittlung von Autorisierungscodes verwenden, z.B. elektronische TAN und/oder PIN, (WO 00/78009 A2) vernachlässigen das Problem der Fälschung der Anmeldebildschirme durch Dritte und/oder sind bei der Verwendung von personenbezogenen Empfangsgeräten (z.B. Handy, Pager etc.), jedoch vor allem bei der Verwendung von nicht personenbezogenen Empfangsgeräten, z.B. Telefax, Nebenstellentelefonen oder anderen Sprachausgabegeräten etc., als partiell unsicher anzusehen, weil ein Empfänger auf das gegenständliche Empfangsgerät immer den kompletten Autorisierungscode erhält und mit diesem alleine die Transaktion bereits autorisieren kann oder die Transaktionsautorisierung alleine durch die Eingabe des immer gleichen PIN Codes am Empfangsgerät durchführt.

Es ist daher Aufgabe der vorliegenden Erfindung, eine Anlage zur Verfügung zu stellen, welche die obengenannten Nachteile beseitigt und den an einer Transaktion Beteiligten eine sehr hohe Sicherheit bietet.

Die Erfindung löst diese Aufgabe dadurch, daß die Auswerteeinheit einen zusätzlichen Codegenerator für einen Zusatzcode erstellt und eine zusätzlichen Sendeeinrichtung aufweist, die den Zusatzcode über das primäre Netz an das Terminal, welches neben der Eingabemöglichkeit des Sicherheitscodes eine Ausgabe- und Eingabemöglichkeit für den Zusatzcode aufweist, übermittelt und zur Ausgabe bringt, und daß nach Eingabe der eingegebene Zusatzcode durch die Auswerteeinheit überprüft wird und bei Gültigkeit von eingegebenem Sicherheitscode und Zusatzcode die Transaktion autorisiert wird.

Ein Benutzer fordert nach einer Tätigkeit, welche eine Autorisierung bzw. Authentifizierung erfordert, eine nachgelagerte Anlage zur sicheren Durchführung einer Transaktion auf. Der Benutzer gibt auf einem Terminal, welches ein Software- oder Hardwareterminal sein kann (z.B. Internet Browser), seine Benutzerkennung ein. Die Benutzerkennung (z.B. Benutzername und Passwort) dient hierbei zur eindeutigen Identifizierung des Benutzers. Die Eingabe der Benutzerkennung kann auch vollständig oder teilweise mittels elektronischem Schreib- oder Übertragungsgerät, Magnetkarte, Chipkarte oder vergleichbaren, geeigneten Anlage erfolgen. Die Benutzerkennung wird vom Terminal vorzugsweise verschlüsselt über eine primäre Verbindung an eine Auswerteeinheit übertragen.

Ein Codegenerator der Auswerteeinheit erzeugt einen Sicherheitscode (z.B. einen mehrstelligen alphanumerischen Code). Ein zusätzlicher Codegenerator der Auswerteeinheit erzeugt einen Zusatzcode. Der Sicherheitscode und der Zusatzcode werden in der Speichereinheit der Auswerteeinheit zu den Transaktionsdaten abgespeichert. Über eine sekundäre Verbindung wird mittels einer Sendeeinrichtung (z.B. Mobilfunksender, Fax-Gateway, etc.) der Sicherheitscode an ein Empfangsgerät (z.B. Mobiltelefon, Pager, Telefon, Fax, eMail, Sprachausgabe etc.) des Benutzers gesendet und dem Benutzer zur Kenntnis gebracht. Der Zusatzcode wird über die bestehende primäre Verbindung mittels einer Sendeeinrichtung (z.B. TCP oder UDP Service etc.) an das Terminal gesendet und dem Benutzer zur Kenntnis gebracht.

Das Terminal stellt eine Ausgabemöglichkeit für den Zusatzcode und dem Benutzer eine Eingabemöglichkeit für den Sicherheitscode, den Zusatzcode und gegebenenfalls weiterer Identifizierungsmerkmale zur Verfügung.

Der Benutzer gibt den Sicherheitscode und den Zusatzcode sowie gegebenenfalls weitere Identifizierungsmerkmale in das Terminal ein. Die getrennte Übermittlung des Sicherheitscodes und des Zusatzcodes verhindert selbst bei nicht verschlüsselten Verbindungen (z.B. WAP, HTTP etc.), oder nicht direkt dem Benutzer zugeordneten Empfangsgeräten (z.B. Fax, Nebenstellentelefone, etc.) daß Dritte beide Codes in Erfahrung bringen. Die Sicherheit wird dadurch erhöht, daß der Zusatzcode aufgrund eindeutiger Identifizierungsmerkmale des Terminals erstellt wird und somit selbst bei Abhören beider Verbindungen, sowie eines Fälschens des Terminals keine positive Autorisierung durchgeführt werden kann.

Damit eine höchstmögliche Betriebssicherheit durch entsprechende Redundanz (Verfügbarkeit der Anlage) sowie die weltweite Einsetzbarkeit der gegenständlichen Erfindung gewährleistet werden kann, besteht diese Auswerteeinheit üblicherweise aus ein oder mehreren vermittelnden Auswerteeinheiten, welche z.B. einem Händler, Dienstleister, zugeordnet sind, und ein oder mehreren durchführenden Auswerteeinheiten welche den zu autorisierenden Benutzern zugeordnet sind.

Die Auswerteeinheit besteht im wesentlichen aus einer Speicher- und Prozessoreinheit, Codegeneratoren und Sendeeinrichtungen. Die Speichereinheit dient im wesentlichen zur Speicherung von Stammdaten (Benutzerkennung, Empfängerkennung, Personendaten etc.) und Transaktionsdaten (Transaktionskennung, Kennung der anfordemden Anlage, Sicherheitscode, Zusatzcode etc.)

Falls vermittelnde und durchführende Auswerteeinheiten zum Einsatz kommen, wird die Benutzerkennung von der vermittelnden Auswerteeinheit entschlüsselt und mittels der dadurch gewonnenen Daten die durchführende Auswerteeinheit ermittelt.

Die Benutzerkennung und die Transaktionsdaten der vorgelagerten Anlage werden verschlüsselt an die durchführende Auswerteeinheit übertragen und von dieser auf Gültigkeit überprüft. Mittels weiterer Identifikationsmerkmale kann diese Sicherheit nochmals gesteigert werden. Denkbar wäre hier die Verwendung eines weiteren Sicherheitscodes welcher an ein zusätzliches Empfangsgerät übermittelt wird und somit die Transaktion von mehreren Benutzern autorisiert werden muß (vergleichbar mit einem Mehrschlüsselprinzip bei Tresoren).

Die Eingabereihenfolge für Sicherheitscode, Zusatzcode und gegebenenfalls weiterer Identifizierungsmerkmale kann durch die Auswerteeinheit vorgegeben werden, wobei in diesem Fall die Auswerteeinheit die Eingabenreihenfolge mittels eines Generators erzeugt, mittels einer Sendeeinheit an das Terminal übermittelt und dem Benutzer zur Kenntnis bringt. Diese Zusatzfunktionalität erhöht die Sicherheit dadurch, daß nur das Terminal die übermittelte Eingabenreihenfolge interpretieren kann und somit nur jener Benutzer die richtige Eingabereihenfolge kennt welcher die Transaktion ausgelöst hat.

Nach der Eingabe von Sicherheitscode, Zusatzcode und gegebenenfalls weiterer Identifizierungsmerkmale, gegebenenfalls in der geforderten Reihenfolge, erfolgt eine Gültigkeitsprüfung durch die Auswerteeinheit. Fällt die Gültigkeitsprüfung positiv aus, wird die Transaktion autorisiert. Fällt die Gültigkeitsprüfung negativ aus (z.B. mehrfach falsche Eingabe der Codes, falsche Reihenfolge, Gültigkeitsdauer der Codes abgelaufen etc.) wird die Transaktion nicht durchgeführt Das Ergebnis der Gültigkeitsprüfung wird dem Benutzer zur Kenntnis gebracht.

Diese neue Anlage für die sichere Durchführung von Transaktionen zwischen informationsverarbeitenden Anlagen ist eine Weiterentwicklung von Sicherheitsanlagen und bietet der Person eine sehr hohe Sicherheit mit hohem Komfort. Die sehr hohe Sicherheit ergibt sich aus der Tatsache, daß für einen Mißbrauch durch Dritte folgende Konstellation eintreffen muß:
- Kenntnis der Benutzerkennung des Benutzers
- Zugriff auf Empfangseinrichtung des Benutzers
- Kenntnis etwaiger Zugriffscodes von Empfangseinrichtungen des Benutzers
- Kenntnis des Sicherheitscodes
- Zugriff auf das Terminal
- Kenntnis des Zusatzcodes
- Kenntnis einer etwaig geforderten Eingabereihenfolge
- Kenntnis etwaiger weiterer Identifikationsmerkmale

Durch die angewendeten Übertragungsarten ist die Anlage im Gegensatz zu bestehenden Anlagen (TAN Listenzusendung per Post etc.) sehr kosteneffektiv. Weiters ermöglicht die Anlage den Zugang für den Benutzer zu beliebig vielen, verschiedenen informationsverarbeitenden Anlagen, mit lediglich einer Benutzerkennung (Unified Logon).

Nachstehend wird die Erfindung anhand der beigefügten Zeichnungen näher erläutert. Es zeigen:
- Fig.1: eine schematische Darstellung der erfindungsgemäßen Anlage und
- Fig.2: ein Ablaufdiagramm der erfindungsgemäßen Anlage.

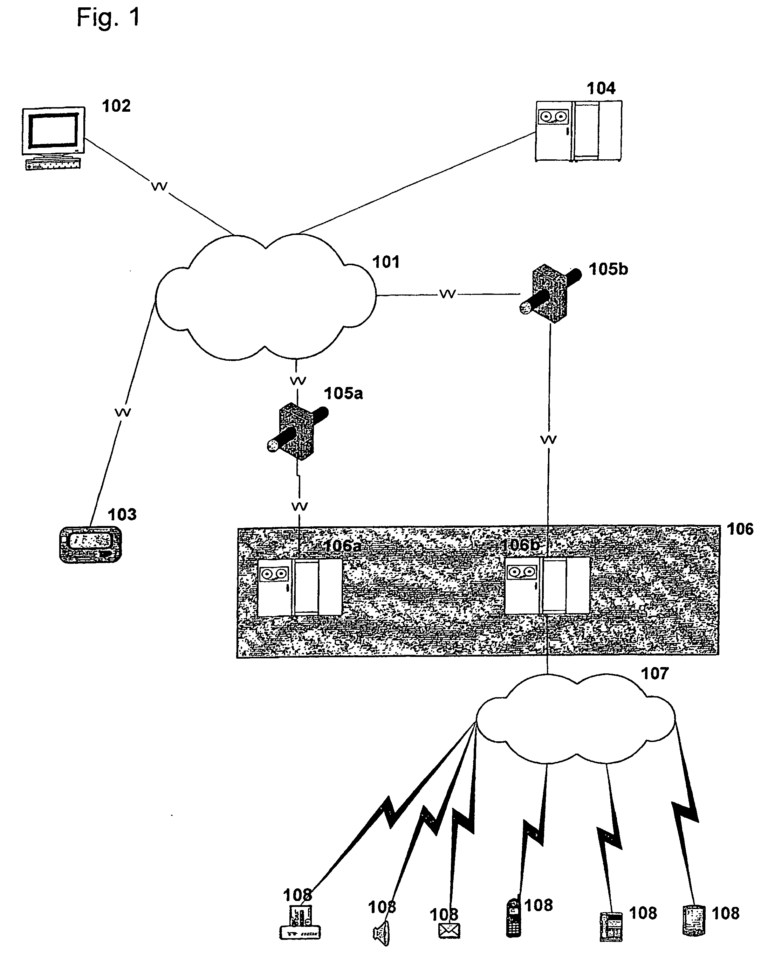

Das in Fig.1 dargestellte Schema umfaßt ein primäres Netz 101, beispielsweise ein LAN, WAN, MAN, Internet, Extranet oder Funknetz, das die Softwareterminals 102, beispielsweise ein Personalcomputer mit virtuellem Terminal auf HTML-Basis, die Hardwareterminals 103, beispielsweise ein Authentifizierungsterminal für Gebäudezutritt, ein Händlersystem oder eine sonstige Anlage 104, die eine authentifizierende Transaktion erzeugt, und eine Auswerteeinheit 106 verbindet, die aus Einheiten 106a, 106b in Hochsicherheitsrechenzentren besteht. Die Einheiten 106a, 106b sind durch Systeme geschützt, die dem Stand der Technik entsprechen und im dargestelltem Schema durch Firewalls 105a, 105b dargestellt werden. Die Verbindung zwischen den Terminals 102, 103 und den Einheiten 106a,106b ist üblicherweise gesichert und verschlüsselt (VV).

Weiters befindet sich im dargestelltem Schema die Darstellung eines alternativen, sekundären Netzes 107, beispielsweise ein LAN, WAN, MAN, Internet, Extranet oder Funknetz, für die Übermittlung des Sicherheitscodes an einen Empfänger 108, beispielsweise ein Mobiltelefon, Mobile Assistent, Mailbox, Faxgerät, Telefon oder Sprachausgabegerät.

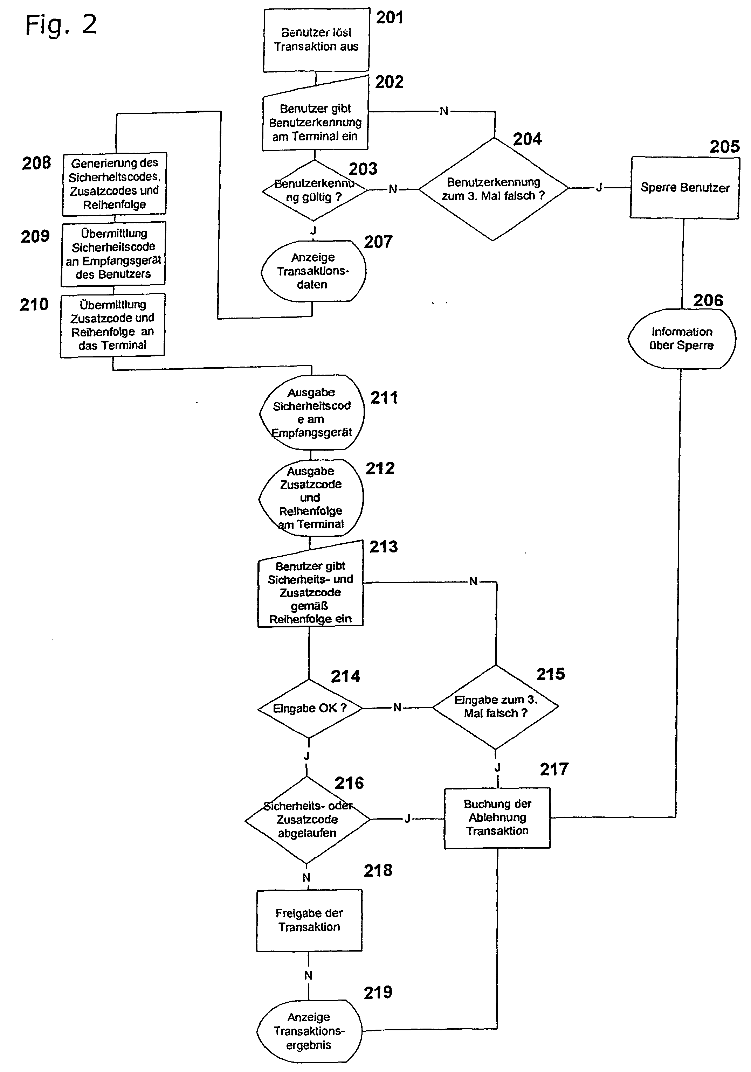

Unter Bezugnahme auf das Ablaufdiagramm in Fig.2 wird das erfindungsgemäße Verfahren beispielhaft anhand einer Bezahlung eines Interneteinkaufs beschrieben.

Der Zahlvorgang wird durch den Benutzer im Shoppingsystem des Händlers 104 angefordert. Diese Anforderung wird durch das Shoppingsystem des Händlers 104 an die vermittelnde Einheit 106a weitervermittelt und der Ablauf der erfindungsgemäßen Anlage gestartet, wie das im Ablaufdiagramm im Schritt 201 angedeutet ist. Ab diesem Zeitpunkt existiert in diesem Beispiel eine gesicherte und verschlüsselte Verbindung zwischen vermittelnder Einheit 106a und dem Terminal 102. Der Benutzer wird aufgefordert seine Benutzerkennung (z.B. UserID und Passwort) in das Terminal 102 gemäß Schritt 202 einzugeben. Die vermittelnde Einheit 106a entschlüsselt die Benutzerkennung und stellt die durchführende Einheit 106b aufgrund der ermittelten Daten fest. Der Benutzer wird mit seinen Transaktionsdaten über eine gesicherte und verschlüsselte Verbindung zur durchführenden Einheit 106b weitergeleitet. Die durchführende Einheit 106b überprüft die eingegebene Benutzerkennung im Schritt 203 auf Plausibilität und Richtigkeit Die durchführende Einheit 106b basiert auf einer leistungsfähigen rechnergestützten Datenbank. Werden die Daten 3x falsch eingegeben, was im Schritt 204 überwacht wird, wird der Benutzer gemäß Schritt 205 gesperrt. Der Benutzer wird mit Schritt 206 über die Sperre informiert und die Transaktion im Schritt 217 als abgelehnt gebucht.. Wurde die Benutzerkennung richtig eingegeben, werden die Transaktionsdaten (z.B. Datum, Auftragsnummer, Wert, etc.) gemäß Schritt 207 am Terminal angezeigt. Die durchführende Einheit 106b erstellt, in diesem Beispiel automatisch mittels Zufallsverfahren, im Schritt 208 einen Sicherheitscodes und einen Zusatzcode, in diesem Beispiel aufgrund eindeutiger Identifizierungsmerkmale des Terminals 102 mittels mathematischem Verfahren. Im Schritt 208 wird außerdem die Eingabereihenfolge des Sicherheitscodes und des Zusatzcodes für die Eingabe in das Terminal 102 festgelegt.

Der Sicherheitscode wird gemäß Schritt 209 an das Empfangsgerät 108, beispielsweise an ein Mobiltelefon des Benutzers mittels SMS (Short Message System), übermittelt und im darauffolgenden Schritt 211 dem Benutzer zur Kenntnis gebracht. Der Zusatzcode und die Eingabereihenfolge des Sicherheitscodes und des Zusatzcodes werden nach Schritt 210 von der durchführenden Einheit 106b an das Terminal 102 übermittelt und gemäß Schritt 212 zur Ansicht gebracht

Der Benutzer gibt im Schritt 213 den Sicherheitscode und den Zusatzcode in der geforderten Reihenfolge im Terminal 102 ein. Die durchführende Einheit 106b überprüft den eingegebenen Sicherheitscode und Zusatzcode und deren Eingabereihenfolge auf Richtigkeit und Gültigkeit, wie dies im Schritt 214 angegeben ist. Werden die Daten 3x falsch eingegeben (Schritt 215), wird die Transaktion als abgelehnt gebucht. (Schritt 217). Wurde der Sicherheits- und Zusatzcode bereits verwendet bzw. ist der Sicherheitscode oder Zusatzcode abgelaufen, was im Schritt 216 überprüft wird, wird die Transaktion ebenfalls als abgelehnt gebucht (Schritt 217). Bei korrekter Eingabe gibt die durchführende Einheit 106b die Transaktion im Schritt 218 frei. Außerdem wird gemäß Schritt 219 das Transaktionsergebnis am Terminal 102 ausgegeben.

## Patentansprüche

1. Anlage für die sichere Durchführung von Transaktionen zwischen informationsverarbeitenden Systemen mit einem Terminal (102), das zur Eingabe einer Benutzerkennung dient, mit einer Auswerteeinheit (106), die mit dem Terminal (102) über ein primäres Netz (101) verbunden ist, und im wesentlichen aus einer Speicher- und Prozessoreinheit besteht, welche zur Speicherung von Benutzerstammdaten und laufenden Transaktionsdaten dient, mit einem Codegenerator, der einen Sicherheitscode erzeugt, mit einer Sendeeinrichtung, die den Sicherheitscode über ein sekundäres Netz (107) an ein Empfangsgerät (108) sendet, und mit einer Eingabemöglichkeit für den Sicherheitscode am Terminal und einer Überprüfung des eingegebenen Sicherheitscodes auf Gültigkeit durch die Auswerteeinheit (106), **dadurch gekennzeichnet, daß** die Auswerteeinheit (106) einen zusätzlichen Codegenerator zur Erstellung eine Zusatzcodes aufweist und eine zusätzliche Sendeeinrichtung zur Übermittlung des Zusatzcodes über das primäre Netz (101) an das Terminal (102) und zur Ausgabe des Zusatzcodes aufweist, wobei das Terminal neben der Eingabemöglichkeit des Sicherheitscodes eine Ausgabe- und Eingabemöglichkeit für den Zusatzcode aufweist und die Auswerteeinheit (106) derart ausgestaltet ist, daß diese den eingegebenen Zusatzcode überprüft und bei Gültigkeit von eingegebenem Sicherheitscode und Zusatzcode die Transaktion autorisiert.

2. Anlage nach Anspruch 1, **dadurch gekennzeichnet, daß** die Auswerteeinheit (106) eine Einheit (106a) zur Entschlüsselung der vom Terminal (102) gesendeten Anmeldedaten und eine an diese Einheit (106a) angeschlossene Einheit (106b) zur Durchführung der Transaktion aufweist.

3. Anlage nach Anspruch 2, **dadurch gekennzeichnet, daß** die Auswerteeinheit (106) aus einer oder mehreren Einheit/en (106a) zur Vermittlung der Anmeldedaten und eine oder mehrere Einheit/en (106b) zur Durchführung der Transaktion besteht

4. Anlage nach einem der Ansprüche 1 bis 3, **dadurch gekennzeichnet, daß** das Terminal (102) zusätzliche Eingabemöglichkeiten für weitere Identifizierungsmerkmale aufweist.

5. Anlage nach einem der Ansprüche 1 bis 4, **dadurch gekennzeichnet, daß** die Auswerteeinheit (106) einen weiteren Generator beinhaltet, der eine Eingabereihenfolge des Sicherheitscode, des Zusatzcode und gegebenenfalls von weiteren Identifizierungsmerkmalen für die Eingabe in das Terminal generiert und daß die Auswerteeinheit (106) eine Sendeeinrichtung zur Übermittlung der Eingabereihenfolge an das Terminal (102) aufweist.

6. Anlage nach Anspruch 5, **dadurch gekennzeichnet, daß** das Terminal (102) eine Eingabemöglichkeit für den Sicherheitscode, den Zusatzcode und gegebenenfalls weitere Identifizierungsmerkmale in der vom Generator generierten Reihenfolge durch den Benutzer aufweist

## Claims

1. Installation for securely carrying out transactions between information-processing systems with a terminal (102) which serves for the input of a user ID, with an evaluating unit (106) which is connected to the terminal (102) through a primary network (101) and essentially comprises a storage and processor unit which serves to store user origin data and running transaction data, with a code generator which generates a security code, with a sending device which sends the security code through a secondary network (107) to a receiving device (108) and with an input possibility for the security code at the terminal and a verification of the input security code for validity through the evaluating unit (106), **characterised in that** the evaluating unit (106) has an additional code generator for generating an additional code and an additional sending device for transmitting the additional code through the primary network (101) to the terminal (102) and for outputting the additional code wherein the terminal has, besides the input possibility for the security code, an output and input possibility for the additional code and the evaluating unit (106) is equipped in such a way that it verifies the input additional code and authorises the transaction if the input security code and additional code are valid.

2. Installation according to claim 1, **characterised in that** the evaluating unit (106) has a unit (106a) for decoding the log-in data sent by the terminal (102) and a unit (106b) connected to said unit (106a) for carrying out the transaction.

3. Installation according to claim 2, **characterised in that** the evaluating unit (106) comprises one or more unit/s (106a) for conveying the log-in data and one or more unit/s (106b) for carrying out the transaction.

4. Installation according to one of the claims 1 to 3, **characterised in that** the terminal (102) has additional input possibilities for further identification characteristics.

5. Installation according to one of the claims 1 to 4, **characterised in that** the evaluating unit (106) contains a further generator which generates an input sequence of the security code, the additional code and optionally further identification characteristics for input into the terminal and **in that** the evaluating unit (106) has a sending device for transmitting the input sequence to the terminal (102).

6. Installation according to claim 5, **characterised in that** the terminal (102) has an input possibility through the user for the security code, the additional code and optionally further identification features in the sequence generated by the generator.

## Revendications

1. Dispositif permettant des transactions sécurisées entre des systèmes de traitement de données, avec un terminal (102), servant à l'introduction d'une identification utilisateur, avec une unité d'évaluation (106), reliée au terminal (102) par un réseau primaire (101) et composé essentiellement d'une unité à mémoire et à processeur, servant à stocker en mémoire des données d'utilisateur, permanentes ou de base, et des données de transaction courantes, avec un générateur de code, générant un code de sécurité, avec un dispositif d'envoi, envoyant le code de sécurité par un réseau secondaire (107) à un appareil récepteur (108), et avec une possibilité d'introduction pour le code de sécurité sur le terminal, et avec une vérification du code de sécurité introduit quant à la validité, au moyen de l'unité d'évaluation (106), **caractérisé en ce que** l'unité d'évaluation (106) présente un générateur de code supplémentaire, pour produire un code additionnel, et présente un dispositif d'envoi supplémentaire pour transmettre le code additionnel, par l'intermédiaire du réseau primaire (101) au terminal (102), et pour éditer le code additionnel, où le terminal, outre la possibilité d'introduction du code de sécurité, présente une possibilité d'édition et d'introduction du code additionnel, et l'unité d'évaluation (106) étant équipée de manière que celle-ci vérifie le code additionnel introduit et, en cas de validité du code de sécurité et du code additionnel introduit, autorise la transaction.

2. Dispositif selon la revendication 1, **caractérisé en ce que** l'unité d'évaluation (106) présente une unité (106a) pour le déchiffrement des données de déclaration, envoyées par le terminal (102), et une unité (106b), raccordée à cette unité (106a), pour accomplir la transaction.

3. Dispositif selon la revendication 2, **caractérisé en ce que** l'unité d'évaluation (106) est formée d'une ou plusieurs unités (106a), pour communiquer les données de déclaration, et une ou plusieurs unités (106b), pour accomplir la transaction.

4. Dispositif selon l'une des revendications 1 à 3, **caractérisé en ce que** le terminal (102) présente des possibilités d'introduction supplémentaires pour d'autres caractéristiques d'identification.

5. Dispositif selon l'une des revendications 1 à 4, **caractérisé en ce que** l'unité d'évaluation (106) contient un autre générateur, qui génère un ordre de succession à l'introduction concernant le code de sécurité, le code additionnel et, le cas échéant, d'autres caractéristiques d'identification pour introduction dans le terminal, et **en ce que** l'outil d'évaluation (106) présente un dispositif d'émission, pour transmettre l'ordre de succession à l'introduction, au terminal (102).

6. Dispositif selon la revendication 5, **caractérisé en ce que** le terminal (102) présente une possibilité d'introduction pour le code de sécurité, le code additionnel et, le cas échéant, d'autres caractéristiques d'identification dans l'ordre de succession, généré par le générateur, par l'utilisateur.
